(19) **Europäisches Patentamt European Patent Office Office européen des brevets**

(11) **EP 1 597 096 B1**

(12) **FASCICULE DE BREVET EUROPEEN**

(45) Date de publication et mention de la délivrance du brevet:
**09.07.2008 Bulletin 2008/28**

(51) Int Cl.:
***B60C 9/20*** (2006.01)

(21) Numéro de dépôt: **04710842.8**

(86) Numéro de dépôt international:
**PCT/EP2004/001361**

(22) Date de dépôt: **13.02.2004**

(87) Numéro de publication internationale:
**WO 2004/076206 (10.09.2004 Gazette 2004/37)**

(54) **ARMATURE DE SOMMET POUR PNEUMATIQUE RADIAL**

GÜRTELVERSTÄRKUNG FÜR EINEN RADIALREIFEN

CROWN REINFORCEMENT FOR A RADIAL TYRE

(84) Etats contractants désignés:
**AT BE BG CH CY CZ DE DK EE ES FI FR GB GR HU IE IT LI LU MC NL PT RO SE SI SK TR**

(30) Priorité: **17.02.2003 FR 0301905**

(43) Date de publication de la demande:
**23.11.2005 Bulletin 2005/47**

(73) Titulaires:
• **Société de Technologie Michelin 63000 Clermont-Ferrand (FR)**
• **Michelin Recherche et Technique S.A. 1763 Granges-Paccot (CH)**

(72) Inventeurs:
• **CALLAMAND, Stéphane, Michelin Okamoto Tire Corp. Gunma T373-8668 (JP)**
• **GERVAIS, Philippe F-63200 Riom (FR)**

(74) Mandataire: **Le Cam, Stéphane Georges Elie M.F.P. Michelin, SGD/LG/PI - F 35 - Ladoux 63040 Clermont-Ferrand Cedex 09 (FR)**

(56) Documents cités:
EP-A- 1 167 079          US-A- 3 543 828
US-A- 4 082 132          US-A- 4 086 948

## Description

La présente invention concerne un pneumatique à armature de carcasse radiale, destiné à équiper des véhicules lourds tels que camions, bus, tracteurs, remorques... etc, et concerne plus particulièrement l'armature de sommet d'un tel pneumatique.

D'une manière générale, l'armature de carcasse radiale du pneumatique considéré, formée d'éléments de renforcement métalliques ou en polyamide aromatique inextensibles, est surmontée radialement d'une armature de sommet comprenant plusieurs nappes de sommet ; en particulier une nappe de triangulation formée d'éléments métalliques orientés par rapport à la direction circonférentielle d'un angle important compris entre 45° et 90°, ladite nappe de triangulation étant elle-même surmontée de deux nappes de travail formées d'éléments de renforcement métalliques inextensibles, parallèles entre eux dans chaque nappe et croisés d'une nappe à la suivante en faisant avec la direction circonférentielle des angles compris entre 10° et 45°. Lesdites nappes de travail, formant l'armature de travail, peuvent encore être recouvertes d'au moins une nappe dite de protection et formée d'éléments de renforcement généralement métalliques et extensibles, dits élastiques.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Dans le cas de pneumatique pour véhicules "Poids-Lourds", une seule nappe de protection est habituellement présente et ses éléments de protection sont, dans la plupart des cas, orientés dans la même direction et avec le même angle en valeur absolue que ceux des éléments de renforcement de la nappe de travail radialement la plus à l'extérieur et donc radialement adjacente. Dans le cas de pneumatiques de Génie Civil destinés aux roulages sur sols plus ou moins accidentés, la présence de deux nappes de protection est avantageuse, les éléments élastiques étant croisés d'une nappe à la suivante et les éléments de renforcement de la nappe de protection radialement intérieure étant croisés avec les éléments de renforcement inextensibles de la nappe de travail radialement extérieure et adjacente à ladite nappe de protection radialement intérieure.

Le demande JP 59/118 507, dans le but d'éviter la séparation entre nappes de sommet, montre une telle architecture d'armature avec une nappe radialement extérieure d'une part formée d'éléments de renforcement en textile à haut module faisant avec la direction circonférentielle un angle en valeur absolue plus faible que l'angle formé par les éléments de la nappe de travail radialement à l'extérieur, et d'autre part ayant une largeur axiale supérieure à la largeur de ladite nappe de travail tout en restant inférieure à la largeur de la nappe de travail radialement intérieure.

La demande JP 03/262 704 décrit et montre, dans un but identique, une solution très proche de la précédente en ce qui concerne les largeurs axiales des nappes et angles des éléments de renforcement des dites nappes. Elle spécifie en outre que la nappe radialement la plus à l'extérieur a un allongement à la rupture d'au moins 5%.

Dans le but de préserver les nappes de travail de la corrosion, et d'éviter la séparation entre armature de sommet et bande de roulement, le document JP 04/055 104, adoptant pratiquement les mêmes largeurs axiales de nappes de sommet, préconise l'emploi d'éléments de renforcement en polyester aromatique pour la nappe de protection.

Le brevet FR 2 493 236, dans le but de résoudre, semble-t-il, les problèmes posés par un roulage sur route grossière, préconise une architecture semblable aux précédentes mais avec une utilisation dans les nappes radialement intérieure et extérieure d'éléments de renforcement dont l'allongement à la rupture est supérieur d'au moins 40% à l'allongement à la rupture des éléments de renforcement des deux nappes de travail.

Les progrès réalisés en durée de vie (nombre de kilomètres parcourus) sur usure des enveloppes "Poids-Lourds", ainsi que la possibilité d'un rechapage ultérieur, aisé et économique, demande une armature de sommet dont la résistance à la séparation entre les bords de nappes de travail soit améliorée.

Le brevet FR 2 800 672, en vue de limiter les séparations en extrémités de nappes de travail, revendique une architecture d'armature de sommet dans laquelle une nappe, dite de protection, présente une largeur axiale comprise entre celles des nappes de sommet de travail, les éléments de renforcement de la nappe de protection étant inclinés dans la même direction que les éléments de renforcement de la nappe de travail radialement adjacente et faisant avec la direction circonférentielle un angle supérieur, d'au moins 5°, à celui de ladite nappe de travail radialement adjacente.

Dans leurs études et notamment durant l'étude de la réalisation de pneumatiques "Poids-Lourds" de durée de vie (nombre de kilomètres parcourus) sur usure toujours plus importante, les inventeurs se sont donnés pour mission de définir une architecture de sommet de pneumatiques permettant d'obtenir une résistance à la séparation entre les bords de nappes de travail encore améliorée.

Ce but a été atteint selon l'invention par un pneumatique comprenant une armature de carcasse radiale surmontée radialement d'une armature de sommet composée d'au moins une armature de travail formée de deux nappes d'éléments de renforcement métalliques inextensibles, calandrés de mélange caoutchouteux, parallèles entre eux dans chaque nappe et croisés d'une nappe à la suivante en formant avec la direction circonférentielle des angles $\alpha_1$ et $\alpha_2$ compris entre 10° et 45°, lesdites nappes de travail ayant des largeurs axiales $L_1$ et $L_2$, et d'au moins une nappe complémentaire, dite de protection, de largeur axiale $L_3$ telle que, $L_2 < L_3$, $L_2$ étant la largeur de la nappe de travail adjacente à la nappe de protection, et comportant des éléments de renforcement métalliques, ledit pneumatique comprenant en outre une couche de mélange caoutchouteux cohésif GB radialement à l'intérieur de l'armature de travail, l'extrémité axialement extérieure de ladite couche GB étant à une distance du plan équatorial supérieure à $L_1/2$.

Un mélange caoutchouteux cohésif est un mélange caoutchouteux notamment robuste à la fissuration.

Selon une réalisation préférée de l'invention, la couche de mélange caoutchouteux cohésif GB présente une épaisseur comprise entre 0.6 et 1.4 mm.

De préférence encore selon l'invention, la couche de mélange caoutchouteux cohésif GB est au contact de la nappe de sommet de travail radialement intérieure et de préférence encore la largeur axiale de la couche de mélange caoutchouteux cohésif GB comprise entre l'extrémité axialement intérieure de ladite couche de mélange caoutchouteux cohésif GB et l'extrémité de la nappe de sommet de travail radialement intérieure est supérieure à 5 mm.

Un pneumatique tel qu'il vient d'être défini selon l'invention, c'est-à-dire possédant une structure de sommet telle que décrite permet de diminuer les risques de séparation entre les bords de nappes de travail et ainsi d'améliorer la durée de vie du pneumatique en autorisant notamment son rechapage. La présence de la couche de mélange caoutchouteux cohésif GB en combinaison avec la nappe complémentaire dite de protection conduit à une amélioration de la résistance à la séparation entre les bords de nappes de travail.

Selon une variante avantageuse de l'invention, la largeur $L_3$ de la nappe de protection est telle que $L_3 < L_1$. En d'autres termes, la nappe de protection présente une largeur axiale inférieure à la largeur axiale de la nappe sommet de travail radialement intérieure et est donc comprise entre les largeurs axiales des deux nappes de sommet de travail. Durant l'étude, il a été mis en évidence qu'il était notamment préférable d'éviter la coïncidence axiale des extrémités de la nappe de protection et de la nappe de sommet de travail radialement intérieur. Une telle architecture serait pénalisante quant à la séparation entre les bords des deux nappes de sommet de travail.

Avantageusement également, indépendamment de la relation précédente entre les largeurs axiales de la nappe de sommet de travail radialement intérieure et de la nappe de sommet de protection, la largeur axiale de la nappe de sommet de travail radialement intérieure est plus grande que la largeur axiale de la nappe de sommet de travail radialement extérieure. En d'autres termes, les largeurs $L_1$ et $L_2$ des nappes de sommet de travail satisfont avantageusement la relation : $L_1 > L_2$.

Selon une réalisation préférée de l'invention, notamment pour assurer une rigidité en dérive du pneumatique suffisante, les largeurs des nappes de sommet de travail satisfont la relation : $1 > L_2/L_1 \geq 2/3$.

Un mode de réalisation préféré de l'invention prévoit que les éléments de renforcement de la nappe de protection sont inclinés dans la même direction que les éléments de renforcement de la nappe de travail radialement adjacent en faisant avec la direction circonférentielle un angle $\alpha_3$ de même sens et supérieur ou égal à l'angle $\alpha_2$ des éléments de renforcement de ladite nappe de travail adjacente à la nappe de protection.

De préférence, l'angle $\alpha_3$, formé par les éléments de renforcement de la nappe de protection avec la direction circonférentielle, est supérieur ou égal en valeur absolue à l'angle $\alpha_2$ des éléments de ladite nappe de travail radialement adjacent d'au moins 5°.

De préférence encore, la différence angulaire $\alpha_3 - \alpha_2$ est au plus égale à 20°.

Si ladite différence est inférieure à 5°, la résistance à la séparation entre nappes de travail n'est pas améliorée ; si la différence est supérieure à 20°, il est possible que la séparation entre les bords des deux nappes de travail soit pénalisée, contrairement à ce qui est recherché. L'angle $\alpha_3$ est encore avantageusement inférieur à 45°.

Dans une variante avantageuse de l'invention, l'armature de sommet est complétée, radialement entre l'armature de carcasse et l'armature de travail par une nappe de triangulation formée d'éléments métalliques inextensibles, faisant de préférence avec la direction circonférentielle un angle $\alpha_0$ de même direction que l'angle $\alpha_1$ formé par les éléments de renforcement de la nappe de travail radialement la plus intérieure et compris entre 45° et 90°.

Comme connu en soi, l'addition entre armature de travail et armature de carcasse d'une nappe dite de triangulation, peut être avantageuse, ladite nappe étant formée d'éléments métalliques fortement inclinés par rapport à la direction circonférentielle, et ayant de préférence une largeur axiale $L_0$ inférieure à la largeur $L_1$ de la nappe de sommet de travail radialement intérieure.

Selon cette variante de réalisation de l'invention, lorsque l'armature de sommet comprend une nappe de triangulation radialement entre l'armature de carcasse et l'armature de travail, la couche de mélange caoutchouteux GB est soit radialement intérieure à ladite nappe de triangulation, soit radialement, au moins en partie entre, la nappe de sommet de travail radialement intérieure et la nappe de triangulation, et donc avantageusement au contact de la nappe de sommet de travail radialement intérieure et au contact de la nappe de triangulation, celle-ci étant de préférence axialement plus étroite que la nappe de sommet de travail radialement intérieure, soit encore radialement intérieure à la nappe de sommet de travail radialement intérieure et sans contact avec la nappe de triangulation.

Selon une réalisation avantageuse de l'invention, notamment destinée à des applications « Poids-Lourds », la nappe de protection est formée de câbles extensibles en acier ou dits élastiques. De tels éléments de renforcement métalliques de la nappe de protection présentent avantageusement un allongement relatif au moins égal à 4% à la rupture.

Une autre réalisation avantageuse de l'invention prévoit encore, notamment pour limiter les risques de dégradation des pneumatiques dus à la formation de fissures entre les extrémités des éléments de renforcement des nappes de travail et à la propagation de celles-ci, au moins dans chaque épaule, une nappe d'éléments de renforcement, avantageusement de faible diamètre, parallèles entre eux dans la nappe et formant avec la direction circonférentielle un angle compris entre 70 et 110°, le bord axialement intérieur de ladite nappe additionnelle étant radialement adjacent à au moins un bord de l'une des nappes de l'armature de sommet, et le bord axialement extérieur de ladite nappe additionnelle étant de préférence radialement intérieur au bord de la nappe auquel la nappe additionnelle est adjacente.

Le bord d'une nappe est défini comme une zone limitée de la nappe délimitée axialement par une extrémité de ladite nappe.

Une réalisation avantageuse de l'invention prévoit que les éléments de renforcement de la nappe additionnelle d'épaule sont dits de faible diamètre, comparativement au diamètre compacté des éléments métalliques des nappes de sommet de travail du pneumatique, lorsque ledit diamètre compacté est inférieur à 0,5 fois le diamètre compacté des éléments métalliques des nappes de sommet de travail du pneumatique.

De préférence encore, le diamètre compacté des éléments de renforcement de la nappe additionnelle est inférieur à 1 mm.

Le diamètre compacté est le diamètre mesuré d'un élément de renforcement lorsque les fils le constituant sont au contact les uns des autres.

Ces diamètres des éléments de renforcement de la nappe additionnelle autorisent la présence de ladite nappe sans que lesdits éléments de renforcement et plus particulièrement leurs extrémités soient une nouvelle source de risque de dégradation au sein du pneumatique.

Il est apparu qu'une telle nappe réalisée selon l'invention améliore de façon très sensible la résistance du pneumatique contre des chocs touchant l'épaule.

Les éléments de renforcement de la nappe additionnelle peuvent être de type textile ou métallique.

Selon un mode de réalisation avantageux de l'invention et plus particulièrement dans le cas d'une nappe additionnelle d'épaule dont le bord axialement extérieur se situe au moins dans la partie radialement supérieure de la zone du flanc, les éléments de renforcement de ladite nappe additionnelle sont métalliques ; il apparaît que le pneumatique selon l'invention satisfait alors à un autre besoin. En effet, un pneumatique ainsi réalisé permet de limiter les risques de dégradation dus à la génération de chaleur apparaissant du fait de l'hystérèse des élastomères sans nuire par ailleurs aux autres propriétés recherchées des caoutchoucs ou plus directement des pneumatiques.

Les dits éléments de renforcement sont alors, de préférence encore, en acier, l'acier étant reconnu comme très bon conducteur de la chaleur.

Le pneumatique selon l'invention autorise par la présence des nappes additionnelles placées aux épaules l'évacuation rapide vers la surface extérieure du pneumatique des calories produites pendant le roulage. En effet, le positionnement des nappes additionnelles permet de conduire la chaleur vers les zones de flanc où la masse caoutchouteuse est moins importante et autorise donc une évacuation des calories plus rapides même si la nature du caoutchouc n'est pas plus favorable à une bonne conduction ; la faible épaisseur permet en effet à la chaleur d'être éliminée plus rapidement le chemin à parcourir étant faible du coeur de la masse caoutchouteuse vers la surface extérieure. Le pneumatique selon l'invention permet ainsi de diminuer les températures de fonctionnement qui pourraient conduire à une diminution de la durée de vie des pneumatiques.

Selon un mode de réalisation préférentielle de l'invention, la nappe additionnelle a son bord axialement intérieur adjacent radialement à l'extérieur au bord de la nappe de protection.

Selon cette réalisation de l'invention, la nappe additionnelle est avantageusement au contact de la couche de mélange caoutchouteux P qui permet de découpler les extrémités libres des éléments de renforcement des différentes nappes de travail.

En outre, le bord axialement extérieur de la nappe additionnelle d'épaule est quant à lui avantageusement axialement adjacent au profilé de mélange caoutchouteux dont l'une des ailes assure, comme connu en soi, la jonction entre l'armature de carcasse et les bords des nappes d'armature de sommet radialement les plus à l'intérieur et dont l'autre aile descend dans le flanc.

Selon ce dernier mode de réalisation, la nappe additionnelle permet d'une part de limiter la formation et la propagation des fissures dans les zones des extrémités des éléments de renfort et, d'autre part, d'apporter une protection contre les risques liés aux chocs sur les zones de flanc. En outre, la nappe additionnelle autorise une évacuation de la chaleur générée dans la zone d'épaule.

D'autres détails et caractéristiques avantageux de l'invention ressortiront ci-après de la description des exemples de réalisation de l'invention en référence aux figures 1 à 5, qui représentent :

Figure 1, une vue partielle en section méridienne d'un schéma d'un pneumatique selon une réalisation de l'invention,

Figure 2, une vue partielle en section méridienne d'un schéma d'un pneumatique selon une deuxième réalisation de l'invention.

Les figures ne sont pas représentées à l'échelle pour en faciliter la compréhension.

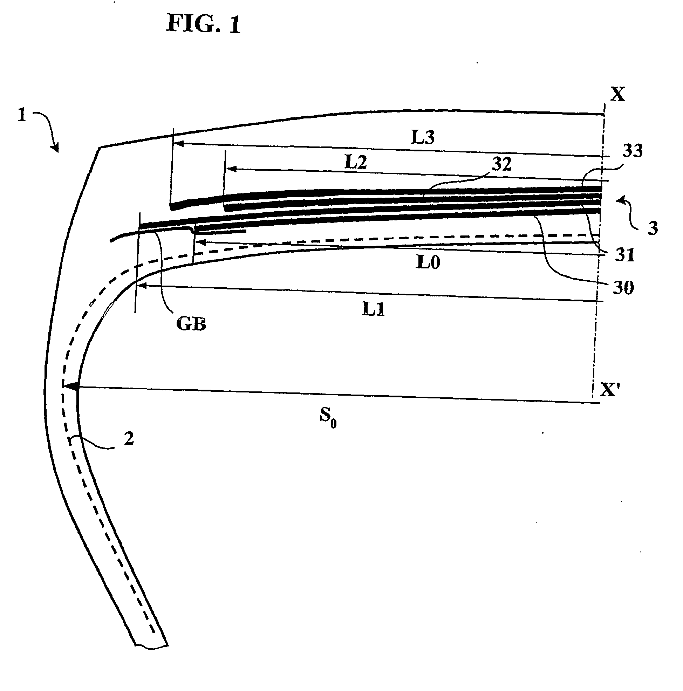

Sur la figure 1, est représentée une vue schématique partielle en section méridienne d'un pneumatique 1 de dimension 385/65.R.22,5 X. Les figures ne représentent qu'une demi-vue des pneumatiques qui se prolongent de manière symétrique par rapport à l'axe XX' qui représente le plan médian circonférentiel, ou plan équatorial, d'un pneumatique.

Le pneumatique 1 comprend une armature de carcasse radiale composée d'une seule nappe 2 de câbles métalliques inextensibles, c'est-à-dire des câbles présentant sous une force de traction égale à 10% de la force de rupture un allongement au plus égal à 0,2%. Ladite armature de carcasse est ancrée dans chaque bourrelet ; lesdits bourrelets ne sont pas représentés sur les figures. Elle est radialement à l'extérieur surmontée d'une armature de sommet 3 comprenant radialement de l'intérieur à l'extérieur :

- une première nappe de sommet 30 dite de triangulation et formée de câbles métalliques inextensibles en acier, orientés d'un angle $\alpha_0$, égal dans le cas décrit à 50°,

- surmontant radialement ladite nappe 30, une première nappe de sommet de travail 31, formée de câbles métalliques inextensibles en acier faisant avec la direction circonférentielle un angle $\alpha_1$ égal à 18°, les câbles de la nappe de triangulation 30 et de la première nappe de travail ayant la même direction,

- radialement à l'extérieur de la nappe de sommet de travail 31 une deuxième nappe de sommet de travail 32 formée de câbles métalliques identiques à ceux de la première nappe 31, et faisant avec la direction circonférentielle un angle $\alpha_2$, opposé à l'angle $\alpha_1$ et, dans le cas montré, égal en valeur absolue audit angle $\alpha_1$ de 18°, (mais pouvant être différent dudit angle $\alpha_1$),

- et enfin, radialement à l'extérieur de la nappe de sommet de travail 32, d'une dernière nappe 33 de câbles métalliques en acier dits élastiques, orientés par rapport à la direction circonférentielle d'un angle $\alpha_3$ de même sens que l'angle $\alpha_2$, mais supérieur en valeur absolue audit angle $\alpha_2$ de 8° puisque égal à 26°, cette dernière nappe étant une nappe dite de protection.

La largeur axiale $L_1$ de la première nappe de travail 31 est égale à 0,78 fois la largeur axiale maximale $S_0$ de la fibre moyenne de l'armature de carcasse 2 lorsque le pneumatique est monté sur sa jante de service et gonflé à sa pression recommandée, soit 280 mm, ce qui est, pour un pneumatique de forme usuelle inférieure à la largeur de la bande de roulement, qui est égale, dans le cas étudié, à 286 mm. La largeur axiale $L_2$ de la deuxième nappe de travail 32 est inférieure à la largeur $L_1$, puisque égale à 212 mm. La largeur axiale $L_0$ de la nappe de triangulation 30 est égale à 270 mm, ce qui représente 0,75 So. La largeur $L_3$ de la nappe de protection 33 est supérieure à la largeur $L_2$ de la nappe de travail 32 la moins large et radialement adjacente, et égale à 260 mm et donc inférieure à la largeur $L_1$.

Le pneumatique 1 comprend en outre une couche de mélange caoutchouteux GB radialement à l'intérieur de l'armature de travail. Cette couche de mélange caoutchouteux GB est mise en place de sorte que l'extrémité axialement extérieure de ladite couche GB est à une distance du plan équatorial XX' supérieure à $L_1/2$, $L_1$ étant la largeur axiale de la première nappe de travail 31.

Il s'avère que la combinaison selon l'invention de la couche de mélange caoutchouteux GB, radialement intérieure au contact de l'extrémité de la nappe de sommet de travail 31, et de la nappe de protection 33, de largeur supérieure à la largeur de la nappe de travail radialement extérieure 32, permet d'améliorer la résistance à la séparation entre les bords de nappes de travail, notamment par une amélioration de la résistance à la propagation des fissures.

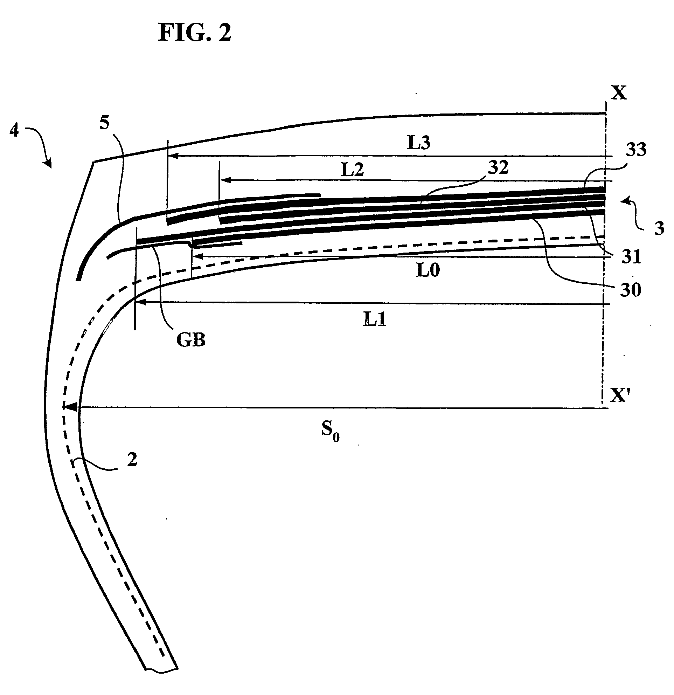

La figure 2 représente une vue schématique en section méridienne d'un pneumatique 4, semblable à celui de la figure 1 qui diffère de ce dernier par la présence d'une nappe 5 d'éléments de renforcement, de faible diamètre, parallèles entre eux dans la nappe et orientés radialement, le bord axialement intérieur de ladite nappe additionnelle 5 étant radialement adjacent à au moins un bord de la nappe de protection 33 de l'armature de sommet 3, et le bord axialement extérieur de ladite nappe additionnelle étant radialement intérieur au bord de la nappe auquel la nappe additionnelle 5 est adjacente. La présence d'une telle nappe additionnelle 5 permet notamment de limiter l'apparition de fissures entre les extrémités des éléments de renforcement des nappes de travail notamment par un effet de protection mécanique et de protection thermique comme expliqué précédemment.

Des pneumatiques décrits selon la figure 1 ont été testés en endurance à l'aide de roulages sur véhicules et sous fortes contraintes de dérive en comparaison avec des pneumatiques témoins, comportant une nappe de protection plus large que la nappe de travail radialement extérieur mais ne comportant pas de couche de mélange caoutchouteux GB.

Alors que les pneumatiques témoins ont réalisé en moyenne 2800 km, les pneumatiques selon l'invention ont roulé pendant 3800 km soit un gain d'environ 36%, sans que les dits pneus soient pénalisés au niveau des séparations observées entre les deux nappes de travail.

**Revendications**

1. Pneumatique (1) comprenant une armature de carcasse radiale (2) surmontée radialement d'une armature de sommet (3) composée d'au moins une armature de travail formée d'au moins deux nappes (31, 32) d'éléments de renforcement métalliques inextensibles, calandrés de mélange caoutchouteux, parallèles entre eux dans chaque nappe et croisés d'une nappe à la suivante en formant avec la direction circonférentielle des angles $\alpha_1$ et $\alpha_2$ compris entre 10° et 45°, les dites nappes de travail (31, 32) ayant des largeurs axiales $L_1$ et $L_2$, et d'au moins une nappe complémentaire (33) dite de protection, de largeur axiale $L_3$ telle que, $L_2 < L_3$, $L_2$ étant la largeur de la nappe de travail adjacente à la nappe de protection, et comportant des éléments de renforcement métalliques, **caractérisé en ce que** ledit pneumatique comprend une couche de mélange caoutchouteux cohésif GB radialement à l'intérieur de l'armature de travail, et **en ce que** l'extrémité axialement extérieure de ladite couche GB est à une distance du plan équatorial supérieure à $L_1/2$.

2. Pneumatique selon la revendication 1, **caractérisé en ce que** la couche de mélange caoutchouteux cohésif GB présente une épaisseur comprise entre 0.6 et 1.4 mm.

3. Pneumatique selon la revendication 1 ou 2, **caractérisé en ce que** la largeur axiale de la couche de mélange caoutchouteux cohésif GB comprise entre l'extrémité axialement intérieure de ladite couche de mélange caoutchouteux cohésif GB et l'extrémité de la nappe de sommet de travail radialement intérieure est supérieure à 5 mm.

4. Pneumatique selon l'une des revendications 1 à 3, **caractérisé en ce que** la nappe de protection présente une largeur $L_3$, telle que $L_3 < L_1$.

5. Pneumatique selon l'une des revendications 1 à 4, **caractérisé en ce que** les nappes de travail présentent des largeurs $L_1$ et $L_2$, telles que $L_2 < L_1$.

6. Pneumatique selon l'une des revendications 1 à 5, **caractérisé en ce que** les largeurs des nappes de sommet de travail satisfont la relation :

$$1 > L_2/L_1 \geq 2/3.$$

7. Pneumatique selon l'une des revendications précédentes, **caractérisé en ce que** les éléments de renforcement de la nappe de protection sont inclinés dans la même direction que les éléments de renforcement de la nappe de travail radialement adjacente en faisant avec la direction circonférentielle un angle $\alpha_3$ de même sens et supérieur ou égal à l'angle $\alpha_2$ des éléments de renforcement de la nappe de travail adjacente à la nappe de protection.

8. Pneumatique selon l'une des revendications précédentes, **caractérisé en ce que** l'angle $\alpha_3$, formé par les éléments de renforcement de la nappe de protection avec la direction circonférentielle, est supérieur en valeur absolue à l'angle $\alpha_2$ des éléments de ladite nappe de travail radialement adjacente d'au moins 5°.

9. Pneumatique selon la revendication 5 ou 6, **caractérisé en ce que** la différence angulaire $\alpha_3 - \alpha_2$ est au plus égale à 20°.

10. Pneumatique selon l'une des revendications précédentes, **caractérisé en ce que** l'armature de sommet (3) est complétée, radialement entre l'armature de carcasse (2) et l'armature de travail (31, 32) par une nappe de triangulation (30) formée d'éléments métalliques inextensibles.

11. Pneumatique selon la revendication 10, **caractérisé en ce que** les éléments métalliques inextensibles formant la nappe de triangulation font avec la direction circonférentielle un angle $\alpha_0$, de même direction que l'angle $\alpha_1$ formé par les éléments de renforcement de la nappe de travail radialement la plus intérieure, et compris entre 45° et 90°.

12. Pneumatique selon l'une des revendications 10 ou 11, **caractérisé en ce que** la couche de mélange caoutchouteux GB est radialement intérieure à ladite nappe de triangulation.

13. Pneumatique selon l'une des revendications précédentes, **caractérisé en ce que** la nappe de protection est formée de câbles extensibles en acier.

14. Pneumatique selon l'une des revendications précédentes, **caractérisé en ce que** ledit pneumatique comprend, au moins dans chaque épaule, une nappe additionnelle (5) d'éléments de renforcement, avantageusement de faible diamètre, parallèles entre eux dans la nappe et formant avec la direction circonférentielle un angle compris entre 70 et 110°, le bord axialement intérieur de ladite nappe additionnelle étant radialement adjacent à au moins un bord de l'une des nappes de l'armature de sommet, et le bord axialement extérieur de ladite nappe additionnelle étant de préférence radialement intérieur au bord de la nappe auquel la nappe additionnelle est adjacente.

15. Pneumatique selon la revendication 14, **caractérisé en ce que** le bord axialement extérieur de la nappe additionnelle d'épaule (5) se situe au moins dans la partie radialement supérieure de la zone du flanc et **en ce que** les éléments de renforcement de ladite nappe additionnelle sont métalliques et de préférence en acier.

**Claims**

1. A tyre (1) comprising a radial carcass reinforcement (2) radially surmounted by a crown reinforcement (3) consisting of at least one working reinforcement formed of at least two plies (31, 32) of calendered inextensible metallic reinforcement elements, of rubber mix, which are parallel to each other within each ply and are crossed from one ply to the next, forming angles $\alpha_1$ and $\alpha_2$ of between 10° and 45° with the circumferential direction, said working plies (31, 32) having axial widths $L_1$ and $L_2$, and of at least one supplementary ply (33), referred to as a protective ply, of axial width $L_3$ such that $L_2 < L_3$, $L_2$ being the width of the working ply adjacent to the protective ply, and comprising metallic reinforcement elements, **characterised in that** said tyre comprises a layer of cohesive rubber mix GB radially to the inside of the working reinforcement, and **in that** the axially outer end of said layer GB is at a distance from the equatorial plane greater than $L_1/2$.

2. A tyre according to Claim 1, **characterised in that** the layer of cohesive rubber mix GB has a thickness of between 0.6 and 1.4 mm.

3. A tyre according to Claim 1 or 2, **characterised in that** the axial width of the layer of cohesive rubber mix GB between the axially inner end of said layer of cohesive rubber mix GB and the end of the radially inner working crown ply is greater than 5 mm.

4. A tyre according to one of Claims 1 to 3, **characterised in that** the protective ply has a width $L_3$, such that $L_3 < L_1$.

5. A tyre according to one of Claims 1 to 4, **characterised in that** the working plies have widths $L_1$ and $L_2$, such that $L_2 < L_1$.

6. A tyre according to one of Claims 1 to 5, **characterised in that** the widths of the working crown plies satisfy the relationship:

$$1 > L_2/L_1 \geq 2/3.$$

7. A tyre according to one of the preceding claims, **characterised in that** the reinforcement elements of the protective ply are inclined in the same direction as the reinforcement elements of the radially adjacent working ply, forming with the circumferential direction an angle $\alpha_3$ of the same direction and greater than or equal to the angle $\alpha_2$ of the reinforcement elements of the working ply adjacent to the protective ply.

8. A tyre according to one of the preceding claims, **characterised in that** the angle $\alpha_3$, formed by the reinforcement elements of the protective ply with the circumferential direction, is greater in absolute value than the angle $\alpha_2$ of the elements of said radially adjacent working ply by at least 5°.

9. A tyre according to Claim 5 or 6, **characterised in that** the angular difference $\alpha_3 - \alpha_2$ is at most equal to 20°.

10. A tyre according to one of the preceding claims, **characterised in that** the crown reinforcement (3) is finished off, radially between the carcass reinforcement (2) and the working reinforcement (31, 32), by a triangulation ply (30) formed of inextensible metallic elements.

11. A tyre according to Claim 10, **characterised in that** the inextensible metallic elements forming the triangulation ply form with the circumferential direction an angle $\alpha_0$ of the same direction as the angle $\alpha_1$ formed by the reinforcement elements of the radially innermost working ply and of between 45° and 90°.

12. A tyre according to one of Claims 10 or 11, **characterised in that** the layer of rubber mix GB is radially internal to said triangulation ply.

13. A tyre according to one of the preceding claims, **characterised in that** the protective ply is formed of extensible steel cables.

14. A tyre according to one of the preceding claims, **characterised in that** said tyre comprises, at least in each shoulder, an additional ply (5) of reinforcement elements, advantageously of small diameter, which are parallel to each other in the ply and forming with the circumferential direction an angle of between 70 and 110°, the axially inner edge of said additional ply being radially adjacent to at least one edge of one of the plies of the crown reinforcement, and the axially outer edge of said additional ply preferably being radially internal to the edge of the ply to which the additional ply is adjacent.

15. A tyre according to Claim 14, **characterised in that** the axially outer edge of the additional shoulder ply (5) is located at least in the radially upper part of the zone of the sidewall and **in that** the reinforcement elements of said additional ply are metallic and preferably made of steel.

**Patentansprüche**

1. Reifen (1), der eine radiale Karkassenbewehrung (2) aufweist, über der radial eine Scheitelbewehrung (3) liegt, die aus mindestens einer Funktionsbewehrung besteht, die aus mindestens zwei Lagen (31, 32) aus unausdehnbaren metallischen Verstärkungselementen, die aus Kautschukmischung kalandriert sind, in jeder Lage parallel zueinander verlaufen und von einer Lage zur folgenden gekreuzt sind, wobei sie mit der Umfangsrichtung Winkel $\alpha_1$ und $\alpha_2$ bilden, die zwischen 10° und 45° enthalten sind, wobei die Funktionslagen (31, 32) die axialen Breiten $L_1$ und $L_2$ aufweisen, und mindestens einer zusätzlichen Lage (33) gebildet ist, die Schutzlage genannt wird, die eine axiale Breite $L_3$ aufweist, derart, dass $L_2 < L_3$, wobei $L_2$ die Breite der an die Schutzlage angrenzenden Funktionslage ist, und metallische Verstärkungselemente aufweist, **dadurch gekennzeichnet, dass** der Reifen radial im Inneren der Funktionsbewehrung eine Schicht aus Kautschukbindemischung GB aufweist, und **dadurch**, dass das axial äußere Ende der Schicht GB sich in einer Entfernung von der Äquatorialebene befindet, die größer als $L_1/2$ ist.

2. Reifen nach Anspruch 1, **dadurch gekennzeichnet, dass** die Schicht aus Kautschukbindemischung GB eine Dicke aufweist, die zwischen 0,6 und 1,4 mm enthalten ist.

3. Reifen nach Anspruch 1 oder 2, **dadurch gekennzeichnet, dass** die axiale Breite der Schicht aus Kautschukbindemischung GB, die zwischen dem axial inneren Ende der Schicht aus Kautschukbindemischung GB und dem Ende der radial inneren Scheitelfunktionslage enthalten ist, größer als 5 mm ist.

4. Reifen nach einem der Ansprüche 1 bis 3, **dadurch gekennzeichnet, dass** die Schutzlage eine Breite $L_3$ aufweist, derart, dass $L_3 < L_1$.

5. Reifen nach einem der Ansprüche 1 bis 4, **dadurch gekennzeichnet, dass** die Funktionslagen die Breiten $L_1$ und $L_2$ aufweisen, derart, dass $L_2 < L_1$.

6. Reifen nach einem der Ansprüche 1 bis 5, **dadurch gekennzeichnet, dass** die Breiten der Scheitelfunktionslagen die folgende Gleichung erfüllen:

$$1 > L_2/L_1 \geq 2/3.$$

7. Reifen nach einem der vorhergehenden Ansprüche, **dadurch gekennzeichnet, dass** die Verstärkungselemente der Schutzlage in die gleiche Richtung geneigt sind wie die Verstärkungselemente der radial angrenzenden Funktionslage, indem sie mit der Umfangsrichtung einen Winkel $\alpha_3$ mit der gleichen Richtung und größer als oder gleich wie der Winkel $\alpha_2$ der Verstärkungselemente der an die Schutzlage angrenzenden Funktionslage bilden.

8. Reifen nach einem der vorhergehenden Ansprüche, **dadurch gekennzeichnet, dass** der Winkel $\alpha_3$, der durch die Verstärkungselemente der Schutzlage mit der Umfangsrichtung gebildet wird, einen Absolutwert aufweist, der um mindestens 5° größer ist als der Winkel $\alpha_2$ der Elemente der radial angrenzenden Funktionsschicht.

9. Reifen nach Anspruch 5 oder 6, **dadurch gekennzeichnet, dass** die Winkeldifferenz $\alpha_3 - \alpha_2$ höchstens gleich 20° ist.

10. Reifen nach einem der vorhergehenden Ansprüche, **dadurch gekennzeichnet, dass** die Scheitelbewehrung (3) radial zwischen der Karkassenbewehrung (2) und der Funktionsbewehrung (31, 32) durch eine Triangulationslage (30) vervollständigt ist, die aus unausdehnbaren metallischen Elementen gebildet ist.

11. Reifen nach Anspruch 10, **dadurch gekennzeichnet, dass** die unausdehnbaren metallischen Elemente, die die Triangulationslage bilden, mit der Umfangsrichtung einen Winkel $\alpha_0$ mit der gleichen Richtung wie der Winkel $\alpha_1$ bilden, der durch die Verstärkungselemente der radial am innersten gelegenen Funktionslage gebildet wird und zwischen 45° und 90° enthalten ist.

12. Reifen nach einem der Ansprüche 10 oder 11, **dadurch gekennzeichnet, dass** die Schicht aus Kautschukmischung GB radial innerhalb der Triangulationslage liegt.

**13.** Reifen nach einem der vorhergehenden Ansprüche, **dadurch gekennzeichnet, dass** die Schutzlage aus ausdehnbaren Stahlkorden gebildet ist.

**14.** Reifen nach einem der vorhergehenden Ansprüche, **dadurch gekennzeichnet, dass** der Reifen mindestens in jeder Schulter eine zusätzliche Lage (5) von Verstärkungselementen, vorzugsweise mit geringem Durchmesser, aufweist, die in der Lage parallel zueinander verlaufen und mit der Umfangsrichtung einen Winkel bilden, der zwischen 70° und 110° enthalten ist, wobei der axial innere Rand der zusätzlichen Lage radial an mindestens einen Rand einer der Lagen der Scheitelbewehrung angrenzt und der axial äußere Rand der zusätzlichen Lage vorzugsweise radial innerhalb des Randes der Lage liegt, an den die zusätzliche Lage angrenzt.

**15.** Reifen nach Anspruch 14, **dadurch gekennzeichnet, dass** der axial äußere Rand der zusätzlichen Schulterlage (5) sich mindestens im radial oberen Abschnitt des Flankenbereichs befindet, und **dadurch**, dass die Verstärkungselemente der zusätzlichen Lage metallisch und vorzugsweise aus Stahl sind.

## FIG. 1

# FIG. 2

**EP 1 597 096 B1**

**RÉFÉRENCES CITÉES DANS LA DESCRIPTION**

**Documents brevets cités dans la description**

- JP 59118507 A
- JP 3262704 A
- JP 4055104 A
- FR 2493236
- FR 2800672